# EUROPÄISCHE PATENTSCHRIFT

(11) **EP 4 018 159 B1**
(45) Veröffentlichungstag und Bekanntmachung des Hinweises auf die Patenterteilung: **30.08.2023**
(21) Anmeldenummer: 20742703.0
(22) Anmeldetag: 16.07.2020
(51) Int. Cl.: G01B 21/04, B23Q 17/20

(54) **MESSSYSTEM**
MEASURING SYSTEM
SYSTÈME DE MESURE

(30) Priorität: 22.08.2019 DE 102019122655
(43) Veröffentlichungstag der Anmeldung: 29.06.2022
(73) Patentinhaber: M&H Inprocess Messtechnik GmbH, 88289 Waldburg (DE)
(72) Erfinder: WIEST, Christoph, 88250 Weingarten (DE)
(74) Vertreter: Otten, Roth, Dobler & Partner mbB Patentanwälte
(86) Internationale Anmeldenummer: PCT/EP2020/070132
(87) Internationale Veröffentlichungsnummer: WO 2021/032374

(56) Entgegenhaltungen:
- WO-A1-2018/134585
- DE-A1-102005 011 285
- DE-A1-102016 212 650
- US-A1- 2017 370 688

## Beschreibung

### Stand der Technik

Messsysteme zur scannenden Erfassung von Messwerten sind beispielsweise aus der DE 10 2016 212 650 A1 bekannt.

Ein bekanntes Messsystem umfasst ein optisches Messinstrument, welches an eine Maschinenachse einer Werkzeug oder Messmaschine anordenbar ausgebildet ist. Mittels des optischen Messinstruments sind beispielsweise mehrere Messwerte in einer zeitlichen Reihenfolge hintereinander erfassbar. Wird das Messinstrument während einer Messung über ein zu messendes Objekt bewegt, können während der Bewegung des Messinstruments damit unterschiedliche Stellen des zu messenden Objekts mit dem Messinstrument vermessen werden. Hierdurch ist beispielsweise ein Höhenprofil des zu messenden Objekts erzeugbar.

Vergleichsweise aufwändig ist es bei diesem bekannten Messsystem die erzeugten Messwerte mit den gemessenen Stellen des Objekts, den Messkoordinaten, in Übereinstimmung zu bringen. Bei bekannten Messsystemen korreliert die Bewegungsgeschwindigkeit des Messinstruments während der Messung mit einer Bestimmungsgenauigkeit der Messstelle. Je genauer die Messstelle bestimmt werden soll, desto langsamer verläuft die Messung oder umgekehrt, je schneller gemessen wird, desto ungenauer ist die Bestimmung der Messstelle.

### Aufgabe und Vorteile der Erfindung

Der Erfindung liegt die Aufgabe zugrunde, ein alternatives Messsystem zur scannenden Erfassung von Messwerten bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Messsystem zur scannenden Erfassung von Messwerten aus, wobei das Messsystem eine Schnittstelle zum Verbinden des Messsystems mit einer Steuereinheit einer Maschine aufweist, wobei die Maschine als eine Werkzeugmaschine oder als eine Messmaschine ausgebildet ist, wobei das Messsystem ein Messinstrument aufweist, wobei das Messsystem, insbesondere das Messinstrument des Messsystems, an eine Bewegungsachse der Maschine anordenbar ausgebildet ist, wobei mit dem Messinstrument ein Messobjekt vermessen werden kann, wobei das Messinstrument beim Vermessen des Messobjekts einen Messwert erzeugt, wobei das Messsystem eine Kontrolleinheit aufweist, wobei die Kontrolleinheit eine Speichereinheit aufweist, um die vom Messsystem erfassten Messwerte zu speichern, wobei die Kontrolleinheit den Messwert verarbeiten und speichern kann, wobei das Messsystem einen Zeitgeber umfasst.

Die Speichereinheit ist vorteilhafterweise als eine herkömmliche magnetische oder elektronische Speichereinheit vorhanden. Beispielsweise ist die Speichereinheit als ein elektronischer Datenspeicher ausgebildet. Z.B. ist die Speichereinheit als eine DRAM-Speichereinheit, als eine ROM-Speichereinheit oder als eine Flash-EEPROM-Speichereinheit vorhanden.

Die Maschine ist beispielsweise als ein CNC-Bearbeitungszentrum vorhanden. Zum Beispiel ist die Werkzeugmaschine als ein Dreh- und/oder Fräszentrum ausgebildet. Vorteilhafterweise umfasst die Werkzeugmaschine mehrere zueinander bewegbare Maschinenachsen. Beispielsweise ist die Werkzeugmaschine als ein 3-Achs- oder als eine 5-Achs-Werkzeugmaschine ausgebildet. Beispielsweise ist die Messmaschine als eine Koordinatenmessmaschine ausgebildet.

Eine Steuereinheit der Maschine ist beispielsweise als eine numerische Steuerung, z.B. als eine CNC (computerized numerical control) ausgebildet.

Eine erste Variante der Erfindung ist nun darin zu sehen, dass das Messsystem, insbesondere die Kontrolleinheit des Messsystems, ein Steuerungsmodul aufweist und das Steuerungsmodul über die Schnittstelle eine Positionskoordinate von der Maschine ausliest und die ausgelesene Positionskoordinate mit einem vorgegebenen Koordinaten-Zielbereich abgleicht, wobei das Steuerungsmodul ein Triggersignal auslöst, wenn das Steuerungsmodul feststellt, dass die Positionskoordinate im Koordinaten-Zielbereich liegt. Eine zweite Variante der Erfindung ist darin zu sehen, dass das Messsystem, insbesondere die Kontrolleinheit des Messsystems, ein Steuerungsmodul aufweist und das Steuerungsmodul eine Zeit des Zeitgebers mit einem vorgegebenen Zeitpunkt abgleicht und wobei das Steuerungsmodul ein Triggersignal auslöst, wenn das Steuerungsmodul feststellt, dass die Zeit des Zeitgebers den vorgegebenen Zeitpunkt erreicht oder überschritten hat. Vorteilhaft ist auch, dass das Messinstrument eine Zeit des Zeitgebers mit einem vorgegebenen Zeitpunkt abgleicht und wobei das Messinstrument ein Triggersignal auslöst, wenn das Messinstrument feststellt, dass die Zeit des Zeitgebers den vorgegebenen Zeitpunkt erreicht oder überschritten hat. Denkbar ist ebenfalls, dass entweder nur das Steuerungsmodul eine Zeit des Zeitgebers mit einem vorgegebenen Zeitpunkt abgleicht oder nur das Messinstrument. Vorstellbar ist aber auch, dass sowohl das Steuerungsmodul als auch das Messinstrument eine Zeit des Zeitgebers mit einem vorgegebenen Zeitpunkt abgleicht. Bevorzugterweise umfasst das Messinstrument einen Zeitgeber.

Ein erfindungsgemäßes Messsystem kann hierbei eine der beiden oben genannten Varianten oder beide Varianten in einer Kombination aufweisen. Hierdurch ist eine vergleichsweise präzise Vermessung eines Messobjekts bei einer vergleichsweise kurzen Messzeit realisierbar.

Beispielsweise ist das Steuerungsmodul in Form einer Recheneinheit ausgebildet, z.B. als ein Mikrocontroller bzw. als ein Mikroprozessor.

Beispielsweise ist dem Messsystem ein Startzeitpunkt einer Messung und eine Messdauer der Messung bekannt und/oder vorgebbar. Beispielsweise ist das Messsystem dazu ausgebildet, ausgehend vom Startzeitpunkt und der Messdauer den vorgegebenen Zeitpunkt zu ermitteln. Denkbar ist auch, dass dem Messsystem ein Startzeitpunkt einer Messung, eine Bewegungsgeschwindigkeit der Bewegungsachse der Maschine und eine Messstrecke bekannt ist. Beispielsweise ist das Messsystem dazu ausgebildet, ausgehend vom Startzeitpunkt, der Bewegungsgeschwindigkeit der Bewegungsachse und der Messtrecke den vorgegebenen Zeitpunkt zu ermitteln. Vorstellbar ist auch, dass das Messsystem dazu ausgebildet ist, sodass dem Messsystem der vorgegebene Zeitpunkt vorgebbar ist.

Vorteilhafterweise ist das Messsystem mittels der Schnittstelle derart mit der Maschine verbindbar, das insbesondere aktuelle Positionskoordinaten des Messinstruments durch das Messsystem auslesbar sind. Beispielsweise sind der Zeitgeber des Messsystems und ein Zeitgeber der Maschine miteinander synchronisierbar. Zum Beispiel ist dem Messinstrument eine zeitliche Verzögerung, beispielsweise ein Delay, zwischen einem Abfragezeitpunkt einer Positionskoordinate und einem Empfangszeitpunkt der Positionskoordinate bekannt.

Auch wird vorgeschlagen, dass die Kontrolleinheit das Triggersignal zusammen mit einem zum Zeitpunkt des Triggersignals erfassten ersten Messwert in der Speichereinheit ablegt, wobei dem Messsystem ein zeitlicher Bezug von Triggersignal und dem ersten Messwert bekannt ist. Vorteilhafterweise ist dem Messsystem ein Delay oder eine Verzögerungszeit zwischen Triggersignal und Erhalt des Messwerts vom Messinstrument bekannt. Insbesondere ist dieser Delay oder diese Verzögerung konstant. Hierdurch ist eine Zuordnung des Messwerts zu einer zugehörigen Messstelle, z.B. einer Positionskoordinate ermöglicht.

Beispielsweise beendet das Messinstrument nach Auslösen des Triggersignals die Messwerterfassung. Zum Beispiel ist der erste Messwert der zeitlich gesehen letzte erzeugte Messwert der Messung. Beispielsweise ist der erste Messwert der zeitlich gesehen letzte von der Kontrolleinheit verarbeitete Messwert der Messung.

Weiter wird vorgeschlagen, dass die Kontrolleinheit dazu ausgebildet ist, das Triggersignal über eine Schnittstelle, insbesondere über die Schnittstelle, an die Steuereinheit der Maschine zu übermitteln. Hierdurch ist eine Achsbewegung der Maschine steuerbar, insbesondere ist aufgrund des Triggersignals eine Bewegung der Bewegungsachse der Maschine anhaltbar.

Weiter wird vorgeschlagen, dass die Schnittstelle als eine standardisierte Schnittstelle ausgebildet ist.

Die Schnittstelle ist vorteilhafterweise als eine serielle Schnittstelle ausgebildet. Vorteilhafterweise basiert die Kommunikation zwischen Messsystem und der Maschine auf einem synchronen, seriellen Protokoll. Denkbar ist auch, dass die Schnittstelle als eine Standard-Schnittstelle, z.B. als ein Standard Datenbus, ausgebildet ist. Beispielsweise ist die Schnittstelle als ein Feldbus, z.B. als eine Profinet-Schnittstelle, als eine EnDat-Schnittstelle oder als eine Ethernet-Schnittstelle vorhanden. Beispielsweise ist die Schnittstelle als ein SPI (Serial Peripheral Interface) ausgebildet. Außerdem ist es von Vorteil, dass die Schnittstelle einen Übertragungskanalzur seriellen Datenkommunikation mit der Maschine besitzt. Der Übertragungskanal ist vorteilhafterweise als eine Signalleitung ausgebildet. Die Schnittstelle ist beispielsweise als eine serielle und/oder parallele Schnittstelle ausgebildet. Vorteilhafterweise ist die Schnittstelle in der Form einer USB-Schnittstelle oder in der Form einer Firewire-Schnittstelle vorhanden. Denkbar ist auch, dass die Schnittstelle als eine proprietäre Schnittstelle vorhanden ist.

Von Vorteil erweist sich auch, dass die Schnittstelle eine drahtgebundene Schnittstelle ist. Hierdurch ist ein vergleichsweise sicherer Übertragungsweg realisiert. Ebenfalls erweist es sich von Vorteil, dass die Schnittstelle einen Übertragungskanal für eine Stromversorgung der Steuerungseinheit und einen Übertragungskanal für eine Messsignalübertragung aufweist.

Vorteilhafterweis ist die Kontrolleinheit dazu ausgebildet, dass Triggersignal über die Schnittstelle als ein standardisiertes Protokoll an die Maschine zu übermitteln.

Bevorzugterweise umfasst das Messsystem zwei Schnittstellen, wobei über eine erste Schnittstelle das Messsystem das Triggersignal an die Steuereinheit der Maschine übermittelt und über eine zweite Schnittstelle das Messsystem Positionskoordinaten von der Maschine ausliest. Die erste Schnittstelle ist vorteilhafterweise als eine proprietäre Schnittstelle vorhanden. Die erste Schnittstelle ist beispielsweise ausgebildet, eine serielle Datenübertragung zu ermöglichen. Die zweite Schnittstelle ist beispielsweise als eine Standard-Schnittstelle, z.B. als eine Bus-Schnittstelle ausgebildet. Beispielsweise ist die zweite Schnittstelle als eine USB- oder Netzwerk-Schnittstelle vorhanden. Denkbar ist auch, dass die erste und die zweite Schnittstelle als eine einzige Schnittstelle vorhanden sind.

Bevorzugterweise umfasst das Messsystem neben dem Messinstrument eine Sende- und Empfangseinheit, wobei die Sende- und Empfangseinheit dazu ausgebildet ist, vom Messinstrument erzeugte Messwerte zu empfangen und zu verarbeiten. Denkbar ist, dass die Sende- und Empfangseinheit die erste Schnittstelle aufweist. Vorstellbar ist auch, dass die Kontrolleinheit Bestandteil der Sende- und Empfangseinheit ist. Beispielsweise ist die Sende- und Empfangseinheit und/oder die Kontrolleinheit mit dem Messinstrument mittels einer dritten Schnittstelle über eine Funkverbindung und/oder über eine optische Verbindung gekoppelt.

Beispielsweise ist die Sende- und Empfangseinheit als eine Steuer- und Auswerteeinheit für das Messinstrument ausgebildet. Vorteilhafterweise steuert die Steuer- und Auswerteeinheit das Messinstrument. Beispielsweise ist die Steuer- und Auswerteeinheit dazu ausgebildet, Messdaten des Messinstruments auszuwerten, insbesondere aus den Messdaten des Messinstruments einen Messwert zu ermitteln.

Beispielsweise kommunizieren die Kontrolleinheit und/oder die Sende- und Empfangseinheit mit dem Messinstrument über einen drahtlosen Kommunikationskanal. Beispielsweise kommunizieren die Kontrolleinheit und/oder die Sende- und Empfangseinheit mit dem Messinstrument mittels optischer Signale und/oder mittels Funksignalen. Die optischen Signale sind beispielsweise Infrarotsignale. Die Funksignale sind beispielsweise Bluetooth-Signale. Weiter wird vorgeschlagen, dass die Sende- und Empfangseinheit und das Messinstrument mittels einer Funkverbindung miteinander kommunizieren. Bevorzugterweise kommunizieren die Kontrolleinheit und/oder die Sende- und Empfangseinheit und das Messinstrument mittels einer WLAN-Schnittstelle, einer Bluetooth-Schnittstelle und/oder einer Mobilfunkschnittstelle. Die Mobilfunkschnittstelle ist beispielsweise als eine LTE-Schnittstelle vorhanden.

Denkbar ist auch, dass die Kontrolleinheit als eine vom Messinstrument und/oder der Sende- und Empfangseinheit separate Recheneinheit ausgebildet ist, z.B. als ein Computer. Bevorzugterweise ist die Kontrolleinheit als separate Recheneinheit sowohl mit der Maschine verbindbar, als auch mit der Sende- und Empfangseinheit und/oder dem Messinstrument.

In einer vorstellbaren Ausbildung des Messsystems umfasst das Messinstrument die Kontrolleinheit und/oder zumindest eine Schnittstelle, mittels welcher das Messinstrument mit der Steuereinheit der Maschine verbindbar ist.

Beispielsweise kommunizieren die Steuereinheit der Maschine und das Messsystem, insbesondere das Messinstrument über einen drahtlosen Kommunikationskanal. Beispielsweise kommunizieren die Steuereinheit der Maschine und das Messsystem mittels optischer Signale und/oder mittels Funksignalen. Die optischen Signale sind beispielsweise Infrarotsignale. Die Funksignale sind beispielsweise Bluetooth-Signale. Weiter wird vorgeschlagen, dass die Steuereinheit der Maschine und das Messsystem, insbesondere das Messinstrument mittels einer Funkverbindung miteinander kommunizieren. Bevorzugterweise kommunizieren die Steuereinheit der Maschine und das Messsystem, insbesondere die Kontrolleinheit, mittels einer WLAN-Schnittstelle, einer Bluetooth-Schnittstelle und/oder einer Mobilfunkschnittstelle. Die Mobilfunkschnittstelle ist beispielsweise als eine LTE-Schnittstelle vorhanden.

Ist die Kontrolleinheit als eine separate Recheneinheit ausgebildet umfasst das Messsystem vorteilhafterweise eine weitere, insbesondere die dritte Schnittstelle, mittels welcher das Messinstrument mit der Kontrolleinheit verbunden ist. Beispielsweise übermittelt das Messinstrument über die weitere Schnittstelle die Messwerte an die Kontrolleinheit. Denkbar ist, dass die Sende- und Empfangseinheit die weitere Schnittstelle aufweist. Beispielweise ist die Sende- und Empfangseinheit mittels der weiteren Schnittstelle physisch mit der Kontrolleinheit verbunden.

Von Vorteil ist auch, dass das Messsystem dazu ausgebildet ist, eine zum Zeitpunkt des Triggersignals erfasste erste Positionskoordinate, insbesondere eine Positionskoordinate des an der Maschine angeordneten Messinstruments, von der Maschine auszulesen, wobei dem Messsystem ein zeitlicher Bezug von Triggersignal und der ersten Positionskoordinate bekannt ist, wobei die Kontrolleinheit des Messsystems dazu ausgebildet ist, einen zeitlichen Bezug zwischen der ersten Positionskoordinate und dem ersten Messwert herzustellen. Hierdurch ist die Erstellung eines Höhenprofils des vermessenen Messobjekts realisierbar.

Beispielsweise ist dem Messsystem ein Delay, beispielsweise ein zeitlicher Verzug zwischen Ausgabe des Triggersignals durch die Kontrolleinheit des Messsystems an die Maschine und Korrelation des Triggersignals mit einer Positionskoordinate durch die Maschine bekannt. Vorteilhafterweise ist die Maschine dazu ausgebildet, das Triggersignal mit einer Positionskoordinate zu korrelieren oder das Triggersignal mit einer Positionskoordinate zu verknüpfen. Vorteilhafterweise ist dieser zeitliche Verzug insbesondere annähernd konstant.

Ebenfalls ist es von Vorteil, dass ausgehend von der Korrelation des ersten Messwerts mit der ersten Positionskoordinate, das Messsystem dazu ausgebildet ist, weiteren vom Messinstrument erfassten Messwerten Positionskoordinaten, insbesondere Positionskoordinaten des Messinstruments, einzig dadurch zuzuweisen, dass eine Bewegungsgeschwindigkeit und eine Bewegungsrichtung des Messinstruments während oder bei der Erfassung der Messwerte bekannt ist. Hierdurch ist eine vergleichsweise präzise Vermessung des Messobjekts bei einer vergleichsweise kurzen Messzeit mit dem Messsystem realisierbar.

Vorteilhafterweise ist die Bewegungsrichtung und/oder die Bewegungsgeschwindigkeit des Messinstruments während der Erfassung der Messwerte konstant. Beispielsweise wird das Messinstrument während der Erfassung der Messwerte mit einer konstanten Geschwindigkeit und/oder in eine konstante Richtung durch eine Bewegungsachse oder mehrere Bewegungsachsen der Maschine bewegt.

Bevorzugterweise ist die Bewegungsrichtung und/oder die Bewegungsgeschwindigkeit des Messinstruments im Bezug zum zu messenden Messobjekt zu sehen. Entsprechend ist es denkbar, dass das Messinstrument während einer Messung, relativ zu einer Umgebung, z.B. zu einer Umgebung einer Maschine, an welcher das Messinstrument angeordnet ist, positionsfest vorhanden ist und stattdessen das Messobjekt relativ zum Messinstrument und relativ zur Umgebung bewegt wird.

Bevorzugterweise ist jede Positionskoordinate, welche das Messsystem einem Messwert zuweist, eine Positionskoordinate des an der Maschine angeordneten Messinstruments. Vorteilhafterweise ist die Positionskoordinate des an der Maschine angeordneten Messinstruments auf eine Ortskoordinate des Messobjekts transformierbar, z.B. durch Normierung. Vorteilhafterweise ist die Ortskoordinate des Messobjekts eine Messstelle, an welcher das Messinstrument das Messobjekt vermessen und dadurch den Messwert erzeugt hat.

Eine vorteilhafte Modifikation der Erfindung ist, dass ausgehend von der Korrelation des ersten Messwerts mit der ersten Positionskoordinate, das Messsystem dazu ausgebildet ist, weiteren vom Messinstrument erfassten Messwerten weitere Positionskoordinaten dadurch zuzuweisen, dass dem Messsystem ein räumlicher Bezug der erfassten Messwerte zueinander bekannt ist. Hierdurch ist ausgehend von der Positionskoordinate des ersten Messwerts einem weiteren Messwert, insbesondere allen weiteren Messwerten vergleichsweise einfach eine entsprechende Positionskoordinate zuordenbar.

Als vorteilhaft erweist sich außerdem, dass ausgehend von der Korrelation des ersten Messwerts mit der ersten Positionskoordinate, das Messsystem dazu ausgebildet ist, weiteren vom Messinstrument erfassten Messwerten weitere Positionskoordinaten dadurch zuzuweisen, dass dem Messsystem ein zeitlicher Bezug der erfassten Messwerte zueinander bekannt ist. Vorteilhafterweise ist dem Messsystem eine Bewegungsgeschwindigkeit und Bewegungsrichtung des Messinstruments zwischen der Erfassung zweier verschiedener Messwerte einer Messung bekannt.

Bevorzugterweise ist dem Messsystem ein räumlicher und/oder zeitlicher Abstand der erfassten Messwerte zueinander bekannt. Unter einem räumlichen Bezug ist vorteilhafterweise nicht nur eine räumliche Distanz oder ein räumlicher Abstand, sondern auch eine insbesondere dazugehörige räumliche Richtung zu verstehen. Beispielsweise ordnet das Messsystem aufgrund des zeitlichen Bezugs, z.B. eines zeitlichen Abstands, und der bekannten Bewegungsgeschwindigkeit und Bewegungsrichtung des Messinstruments weiteren vom Messinstrument erfassten Messwerten weitere Positionskoordinaten zu. Insbesondere ist dem Messsystem ein räumlicher und/oder zeitlicher Abstand der erfassten Messwerte einer Messung bekannt. Vorteilhafterweise erzeugt das Messsystem Messwerte, welche in einem bekannten zeitlichen Bezug zueinander stehen. Beispielsweise erzeugt das Messsystem, zum Beispiel das Messinstrument Messwerte in einem insbesondere konstanten räumlichen und/oder zeitlichen Intervall.

Vorteilhafterweise ist dem Messsystem ein räumlicher Bezug und/oder ein zeitlicher Bezug zwischen dem ersten Messwert und einem weiteren Messwert bekannt. Insbesondere ist dem Messsystem ein räumlicher Bezug und/oder ein zeitlicher Bezug zwischen dem ersten Messwert und allen weiteren Messwerten bekannt. Beispielsweise ist dem Messsystem eine Bewegungsgeschwindigkeit und eine Bewegungsrichtung der Bewegungsachse der Maschine bekannt, insbesondere aller Bewegungsachsen der Maschine.

Vorteilhafterweise ist das Messsystem auf eine Bewegungsgeschwindigkeit einer Bewegungsachse der Maschine kalibriert und/oder normiert. Insbesondere ist das Messsystem auf mehrere Bewegungsgeschwindigkeiten einer Bewegungsachse der Maschine kalibriert und/oder normiert. Hierdurch ist dem Messsystem ein räumlicher Abstand der Messwerte bekannt. Insbesondere ist dem Messsystem ein räumlicher Abstand der Messwerte abhängig von einer Zykluszeit der Messwerterfassung oder Messwerterzeugung des Messinstruments und z.B. abhängig von der Bewegung der Bewegungsachse bekannt.

In einer vorteilhaften Ausgestaltung der Erfindung ist das Messinstrument als ein berührungslos arbeitendes Messinstrument ausgebildet.

Das Messinstrument ist beispielsweise als ein Messsensor vorhanden. Das Messinstrument ist beispielsweise als ein konfokal-chromatischer Abstandssensor, als ein Laserscanner, und/oder als ein bildgebendes Messinstrument, z.B. als ein CCD-Sensor, ausgebildet. Beispielsweise ist das Messinstrument als ein Linienscanner vorhanden. Vorteilhafterweise ist das Messinstrument als ein scannendes Messinstrument, z.B. als ein Scanner vorhanden. Beispielsweise erzeugt das Messinstrument während einer Messung punktweise, linienweise oder zeilenweise Messwerte.

Vorstellbar ist aber auch, dass das Messinstrument als ein berührender, insbesondere taktil arbeitender Messsensor ausgebildet ist. Beispielsweise ist das Messinstrument dazu ausgebildet, eine Auslenkgröße eines Tastelements des taktil arbeitenden Messsensors und/oder einer Kraft des Tastelements des taktil arbeitenden Messsensors zu ermitteln.

In einer vorteilhaften Ausführungsform der Erfindung ist das Messsystem dazu ausgebildet folgende Verfahrensschritte insbesondere in der folgend genannten Reihenfolge nacheinander auszuführen:
- Kalibieren und/oder Normieren einer Bewegungsgeschwindigkeit des an einer Bewegungsachse der Maschine angeordneten Messinstruments
- Einlesen, Abfragen und/oder Ermitteln eines Koordinaten-Zielbereichs und/oder eines vorgegebenen Zeitpunkts
- Speichern des Koordinaten-Zielbereichs und/oder des vorgegebenen Zeitpunkts in einer Speichereinheit
- Starten eines Messvorgangs bzw. einer Messung
- Erzeugen von Messwerten durch das Messinstrument des Messsystems
- Auslesen von Positionskoordinaten einer Bewegungsachse der Maschine durch das Steuerungsmodul des Messsystems und/oder Auslesen einer Zeit des Zeitgebers des Messsystems
- Abgleichen der ausgelesenen Positionskoordinaten mit dem vorgegebenen Koordinaten-Zielbereich und/oder Abgleichen einer Zeit eines Zeitgebers des Messsystems mit dem vorgegebenen Zeitpunkt durch das Steuerungsmodul der Kontrolleinheit
- Auslösen eines Triggersignals durch das Steuerungsmodul, wenn die Positionskoordinate im Koordinaten-Zielbereich liegt und/oder Auslösen eines Triggersignals durch das Steuerungsmodul, wenn die Zeit des Zeitgebers den vorgegebenen Zeitpunkt erreicht oder überschritten hat
- Ablegen des Triggersignals zusammen mit einem zum Zeitpunkt des Triggersignals ermittelten Messwert in der Speichereinheit, wobei dem Messsystem ein zeitlicher Bezug von Triggersignal und Messwert bekannt ist
- Übermitteln des Triggersignals durch das Messsystem, insbesondere durch die Kontrolleinheit des Messsystems, an eine Steuereinheit der Maschine
- Auslesen der durch die Maschine abgespeicherten Achsposition einer Bewegungsachse der Maschine von der Maschine durch die Kontrolleinheit

Eine vorteilhafte Variante der Erfindung ist eine Maschine, insbesondere Werkzeugmaschine und/oder Messmaschine, mit einem Messsystem nach einer der vorangegangen genannten Ausführungen, wobei die Maschine dazu ausgebildet ist, aufgrund des Triggersignals des Messsystems eine Achsbewegung zu stoppen. Hierdurch ist ein Messablauf durch das Messsystem steuerbar.

Vorteilhafterweise ist die Maschine dazu ausgebildet, aufgrund des vom Messsystem ausgelösten Triggersignals eine Achsbewegung zu stoppen.

Eine weitere vorteilhafte Ausgestaltung der Erfindung ist eine Maschine, insbesondere Werkzeugmaschine und/oder Messmaschine, wie vorangegangen genannt, wobei die Steuereinheit der Maschine eine Achsposition zum Zeitpunkt des Empfangs des Triggersignals in einem Speichermodul der Maschine auslesbar abspeichert.

Vorteilhafterweise speichert die Steuereinheit der Maschine eine Achsposition zum Zeitpunkt des Empfangs des Triggersignals zusammen mit dem Triggersignal im Speichermodul der Maschine. Beispielswiese ist die Achsposition zum Zeitpunkt des Empfangs des Triggersignals für das Messsystem erkennbar im Speichermodul der Maschine auslesbar ablegbar.

Vorstellbar ist auch, dass die Kontrolleinheit an der Maschine vorhanden ist. Denkbar ist auch, dass die Kontrolleinheit ein Bestandteil der Maschine ist. Beispielsweise ist die Kontrolleinheit eine Komponente der Steuereinheit. Zum Beispiel umfasst die Steuereinheit die Kontrolleinheit.

In einer vorteilhaften Ausführungsform der Erfindung ist die Maschine mit dem Messsystem dazu ausgebildet folgende Verfahrensschritte insbesondere in der folgend genannten Reihenfolge nacheinander auszuführen:
- Kalibieren und/oder Normieren einer Bewegungsgeschwindigkeit des an einer Bewegungsachse der Maschine angeordneten Messinstruments
- Einlesen, Abfragen und/oder Ermitteln eines Koordinaten-Zielbereichs und/oder eines vorgegebenen Zeitpunkts
- Speichern des Koordinaten-Zielbereichs und/oder des vorgegebenen Zeitpunkts in einer Speichereinheit
- Starten eines Messvorgangs bzw. einer Messung
- Erzeugen von Messwerten durch das Messinstrument des Messsystems
- Starten einer insbesondere kontinuierlichen und/oder konstanten Bewegung einer Bewegungsachse durch die Maschine
- Auslesen von Positionskoordinaten der Bewegungsachse der Maschine und/oder Auslesen einer Zeit des Zeitgebers des Messsystems durch das Steuerungsmodul des Messsystems
- Abgleichen der ausgelesenen Positionskoordinaten mit dem vorgegebenen Koordinaten-Zielbereich und/oder Abgleichen einer Zeit eines Zeitgebers des Messsystems mit dem vorgegebenen Zeitpunkt durch das Steuerungsmodul der Kontrolleinheit
- Auslösen eines Triggersignals durch das Steuerungsmodul, wenn die Positionskoordinate im Koordinaten-Zielbereich liegt und/oder Auslösen eines Triggersignals durch das Steuerungsmodul, wenn die Zeit des Zeitgebers den vorgegebenen Zeitpunkt erreicht oder überschritten hat
- Ablegen des Triggersignals zusammen mit einem zum Zeitpunkt des Triggersignals ermittelten Messwert in der Speichereinheit, wobei ein zeitlicher Bezug von Triggersingal und Messwert bekannt ist
- Übermitteln des Triggersignals durch das Messsystem, insbesondere durch die Kontrolleinheit des Messsystems, an eine Steuereinheit der Maschine
- Empfangen und Verarbeiten des Triggersignals durch die Steuereinheit der Maschine
- Stoppen der Achsbewegung der Bewegungsachse durch die Steuereinheit der Maschine
- Auslesen und Speichern einer Achsposition der Bewegungsachse der Maschine zum Zeitpunkt des Triggersignals in einem Speichermodul der Maschine
- Auslesen der durch die Maschine abgespeicherten Achsposition der Bewegungsachse von der Maschine durch die Kontrolleinheit

### Beschreibung von Ausführungsbeispielen

Mehrere Ausführungsbeispiele werden anhand der nachstehenden schematischen Zeichnungen unter Angabe von weiteren Einzelheiten und Vorteilen näher erläutert:
Es zeigen:
- Figur 1: eine schematische Darstellung einer Maschine mit einem Messsystem nach einer ersten Ausführungsvariante,
- Figur 2: eine schematische Darstellung einer Maschine mit einem Messsystem nach einer zweiten Ausführungsvariante,
- Figur 3: eine schematische Darstellung einer Maschine mit einem Messsystem nach einer dritten Ausführungsvariante.

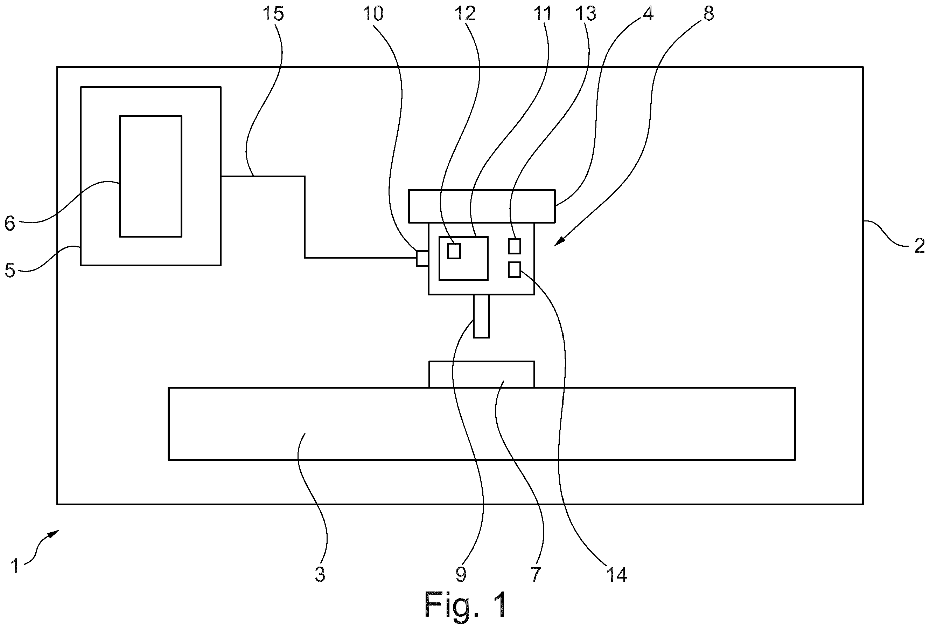

Figur 1 zeigt eine schematisch dargestellte Maschine 1 mit einer Umhausung 2, einem Maschinentisch 3, einer Bewegungsachse 4 und einer Steuereinheit 5. Die Maschine 1 umfasst beispielsweise ein Speichermodul 6, welches z.B. an der Steuereinheit 5 vorhanden ist. Auf dem Maschinentisch 3 ist beispielhaft ein Messobjekt 7 angeordnet.

An der Maschine 1 ist vorteilhafterweise ein Messsystem 8 angeordnet vorhanden. Das Messsystem 8 umfasst ein Messinstrument 9, eine Schnittstelle 10 und eine Kontrolleinheit 11. Die Kontrolleinheit 11 weist beispielsweise ein Steuerungsmodul 12 auf. Das Messsystem 8 kann des Weiteren eine Speichereinheit 13 und einen Zeitgeber 14 umfassen.

In der Ausführungsvariante gemäß Figur 1 bilden die weiteren Komponenten des Messsystems 8, wie z.B. die Kontrolleinheit 11, neben dem Messinstrument 9 eine separate kompakte Einheit. Gemäß Figur 1 sind die weiteren Komponenten des Messsystems 8 als eine kompakte Baueinheit, bspw. in einem einzigen Gehäuse an der Bewegungsachse 4 der Maschine 1 anordenbar ausgebildet.

Beispielsweise ist das Messsystem 8 mittels einem Übertragungskanal 15 über die Schnittstelle 10 mit der Steuereinheit 5 der Maschine 1 verbunden.

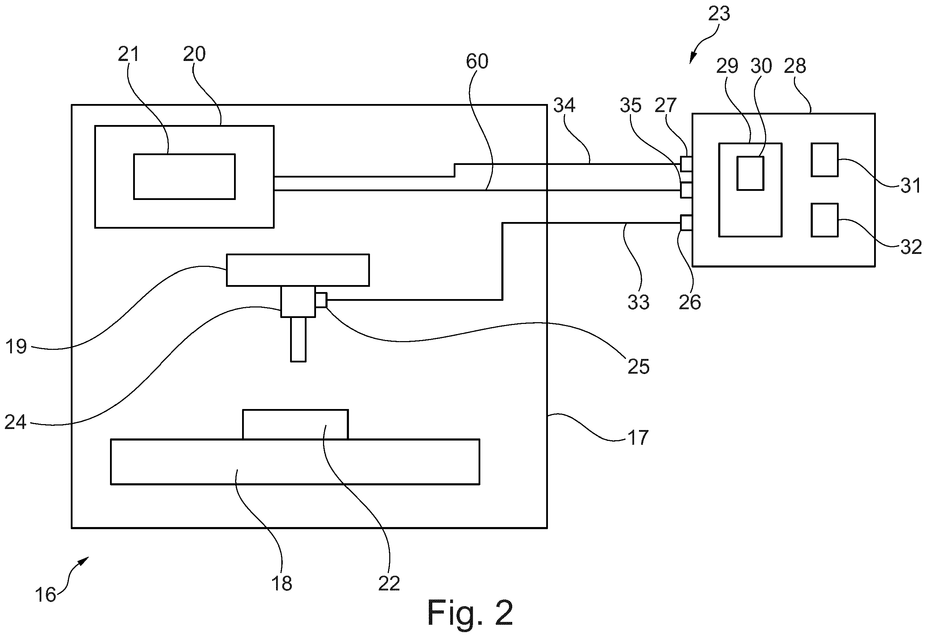

Figur 2 zeigt in einer weiteren Ausführungsvariante eine Maschine 16 mit einer schematisch dargestellten Umhausung 17, einem Maschinentisch 18, einer Bewegungsachse 19 und einer Steuereinheit 20. Die Maschine 16 umfasst beispielsweise ein Speichermodul 21, welches z.B. an der Steuereinheit 20 vorhanden ist. Auf dem Maschinentisch 18 ist beispielhaft ein Messobjekt 22 angeordnet.

An der Maschine 16 ist vorteilhafterweise ein Messsystem 23 angeordnet. Das Messsystem 23 umfasst ein Messinstrument 24, eine erste Schnittstelle 25, eine zweite Schnittstelle 26 und beispielsweise eine dritte Schnittstelle 27. Weiter umfasst das Messsystem 23 beispielsweise eine Sende- und Empfangseinheit 28. Die Sende- und Empfangseinheit 28 weist beispielsweise eine Kontrolleinheit 29 mit einem Steuerungsmodul 30 auf. Das Messsystem 23 kann des Weiteren eine Speichereinheit 31 und einen Zeitgeber 32 umfassen.

In der Ausführungsvariante gemäß Figur 2 ist das Messinstrument 24 beispielhaft über die Schnittstellen 25, 26 mittels einem Übertragungskanal 33 mit der Sende- und Empfangseinheit 28 gekoppelt. Der Übertragungskanal 33 ist beispielsweise als ein kabelloser Übertragungskanal vorhanden. Der Übertragungskanal 33 ist beispielsweise als eine Funkverbindung oder ein Funkkanal ausgebildet. Denkbar ist auch, dass der Übertragungskanal 33 als eine optische Verbindung, z.B. als ein optischer Leitungskanal ausgebildet ist. Außerdem ist die Sende- und Empfangseinheit 28 mittels der Schnittstelle 28 mit der Maschine 16, insbesondere der Steuereinheit 20 der Maschine 16 über einen weiteren Übertragungskanal 34 verbunden.

Gemäß der Ausführungsvariante nach Figur 2 ist es weiter vorstellbar, dass eine weitere Schnittstelle 35 an der Sende- und Empfangseinheit 28 vorhanden ist, wobei die Sende- und Empfangseinheit 28 mittels der Schnittstelle 35 über eine weiteren Übertragungskanal 60 mit der Maschine 16 verbunden sein kann.

Denkbar ist weiter, dass eine der beiden Schnittstellen 27, 35 als eine Standardschnittstelle ausgebildet ist, z.B. als eine USB- oder Netzwerkschnittstelle. Beispielsweise ist diese Schnittstelle dazu ausgebildet, Positionskoordinaten von der Maschine 16 durch die Kontrolleinheit 29 abzufragen. Weiter ist es vorstellbar, dass die andere der beiden Schnittstellen 27, 35 als eine proprietäre Schnittstelle ausgebildet ist. Ist die andere Schnittstelle 27, 35 als eine proprietäre Schnittstelle ausgebildet. So ist es vorteilhaft, dass die Kontrolleinheit 29 mittels der proprietären Schnittstelle mit der Maschine 16 mittels einer seriellen Datenübertragung kommunizieren kann.

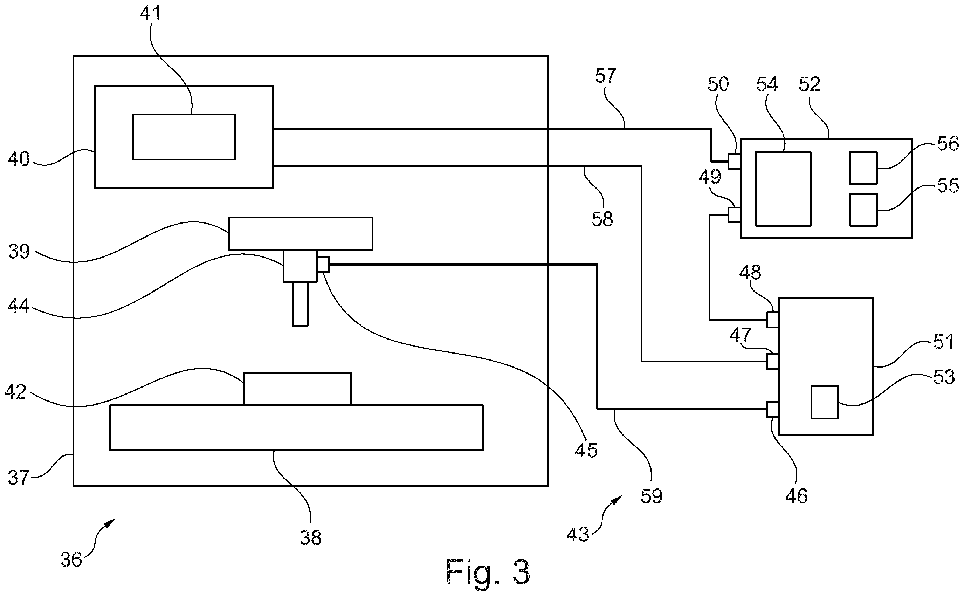

Figur 3 zeigt in einer weiteren Ausführungsvariante eine Maschine 36 mit einer schematisch dargestellten Umhausung 37, einem Maschinentisch 38, einer Bewegungsachse 39 und einer Steuereinheit 40. Die Maschine 36 umfasst beispielsweise ein Speichermodul 41, welches z.B. an der Steuereinheit 40 vorhanden ist. Auf dem Maschinentisch 38 ist beispielhaft ein Messobjekt 42 angeordnet.

An der Maschine 36 ist vorteilhafterweise ein Messsystem 43 angeordnet. Das Messsystem 43 umfasst ein Messinstrument 44 und Schnittstellen 45 bis 50. Weiter umfasst das Messsystem 43 beispielsweise Sende- und Empfangseinheit 51 und eine Kontrolleinheit 52. Die Sende- und Empfangseinheit 51 und die Kontrolleinheit 52 sind vorteilhafterweise beabstandet zueinander vorhanden und mittels der Schnittstellen 48, 49 z.B. über eine USB-Verbindung oder eine Ethernet-Verbindung bzw. Netzwerkverbindung miteinander gekoppelt. Die Kontrolleinheit 52 ist beispielsweise als ein Computer, z.B. als ein Laptop vorhanden.

Beispielsweise umfasst die Sende- und Empfangseinheit 51 einen Zeitgeber 53. Denkbar ist auch, dass die Kontrolleinheit 52 einen Zeitgeber aufweist (nicht gezeigt).

Die Kontrolleinheit 52 weist ein Steuerungsmodul 54 und beispielsweise eine Speichereinheit 55 auf. Vorstellbar ist ebenfalls, dass die Sende- und Empfangseinheit 51 eine Speichereinheit umfasst (nicht gezeigt).

Vorstellbar ist weiter, dass die Schnittstelle 50 als eine Standardschnittstelle ausgebildet ist, z.B. als eine USB- oder Netzwerkschnittstelle mit einem entsprechenden Übertragungskanal 57. Beispielsweise ist diese Schnittstelle 50 dazu ausgebildet, Positionskoordinaten von der Maschine 36 durch die Kontrolleinheit 52 abzufragen und auszulesen. Vorstellbar ist weiter, dass die Kontrolleinheit 52 einen Zeitgeber 56 umfasst, wobei die Kontrolleinheit 52, insbesondere das Steuerungsmodul 54 überwacht und prüft, ob eine Zeit des Zeitgebers 56 einen vorgegebenen Zeitpunkt erreicht oder überschritten hat und/oder ob eine ausgelesene Positionskoordinate in einem vorgegebenen Koordinaten-Zielbereich liegt.

Die Schnittstelle 47 der Sende- und Empfangseinheit 51 ist vorteilhafterweise als eine proprietäre Schnittstelle ausgebildet, um ein Triggersignal mittels einem weiteren Übertragungskanal 58 an die Steuereinheit 40 der Maschine 36 zu übermitteln. Das Triggersignal ist beispielsweise mittels einer seriellen Datenübertragung an die Maschine 36 übermittelbar.

In der Ausführungsvariante gemäß Figur 3 ist das Messinstrument 44 beispielhaft mittels der Schnittstellen 45, 46 über einen Übertragungskanal 59 mit der Sende- und Empfangseinheit 51 gekoppelt. Der Übertragungskanal 59 ist beispielsweise als ein kabelloser Übertragungskanal vorhanden. Der Übertragungskanal 59 ist beispielsweise als eine Funkverbindung oder ein Funkkanal ausgebildet. Denkbar ist auch, dass der Übertragungskanal 59 als eine optische Verbindung, z.B. als ein optischer Leitungskanal ausgebildet ist.

**Bezugszeichenliste**

| | | | |
|---|---|---|---|
| 1 | Maschine | 31 | Speichereinheit |
| 2 | Umhausung | 32 | Zeitgeber |
| 3 | Maschinentisch | 33 | Übertragungskanal |
| 4 | Bewegungsachse | 34 | Übertragungskanal |
| 5 | Steuereinheit | 35 | Schnittstelle |
| 6 | Speichermodul | 36 | Maschine |
| 7 | Messobjekt | 37 | Umhausung |
| 8 | Messsystem | 38 | Maschinentisch |
| 9 | Messinstrument | 39 | Bewegungsachse |
| 10 | Schnittstelle | 40 | Steuereinheit |
| 11 | Kontrolleinheit | 41 | Speichermodul |
| 12 | Steuerungsmodul | 42 | Messobjekt |
| 13 | Speichereinheit | 43 | Messsystem |
| 14 | Zeitgeber | 44 | Messinstrument |
| 15 | Übertragungskanal | 45 | Schnittstelle |
| 16 | Maschine | 46 | Schnittstelle |
| 17 | Umhausung | 47 | Schnittstelle |
| 18 | Maschinentisch | 48 | Schnittstelle |
| 19 | Bewegungsachse | 49 | Schnittstelle |
| 20 | Steuereinheit | 50 | Schnittstelle |
| 21 | Speichermodul | 51 | Sende- und Empfangseinheit |
| 22 | Messobjekt | | |
| 23 | Messsystem | 52 | Kontrolleinheit |
| 24 | Messinstrument | 53 | Zeitgeber |
| 25 | Schnittstelle | 54 | Steuerungsmodul |
| 26 | Schnittstelle | 55 | Speichereinheit |
| 27 | Schnittstelle | 56 | Zeitgeber |
| 28 | Sende- und Empfangseinheit | 57 | Übertragungskanal |
| | | 58 | Übertragungskanal |
| 29 | Kontrolleinheit | 59 | Übertragungskanal |
| 30 | Steuerungsmodul | 60 | Übertragungskanal |

## Patentansprüche

1. Messsystem (8, 23, 43) zur scannenden Erfassung von Messwerten, wobei das Messsystem (8, 23, 43) eine Schnittstelle (10, 27, 50) zum Verbinden des Messsystems (8, 23, 43) mit einer Steuereinheit (5, 20, 40) einer Maschine (1, 16, 36) aufweist, wobei die Maschine (1, 16, 36) als eine Werkzeugmaschine oder als eine Messmaschine ausgebildet ist, wobei das Messsystem (8, 23, 43) ein Messinstrument (9, 24, 44) aufweist, wobei das Messsystem (8, 23, 43) an eine Bewegungsachse (4, 19, 39) der Maschine (1, 16, 36) anordenbar ausgebildet ist, wobei mit dem Messinstrument (9, 24, 44) ein Messobjekt (7, 22, 42) vermessen werden kann, wobei das Messinstrument (9, 24, 44) beim Vermessen des Messobjekts (7, 22, 42) einen Messwert erzeugt, wobei das Messsystem (8, 23, 43) eine Kontrolleinheit (11, 29, 52) aufweist, wobei die Kontrolleinheit (11, 29, 52) eine Speichereinheit (13, 31, 40) aufweist, um die vom Messsystem (8, 23, 43) erfassten Messwerte zu speichern, wobei die Kontrolleinheit (11, 29, 52) den Messwert verarbeiten und speichern kann, wobei das Messsystem (8, 23, 43) einen Zeitgeber (14, 32, 53) umfasst,
**dadurch gekennzeichnet, dass**
das Messsystem (8, 23, 43) ein Steuerungsmodul (12, 30, 54) aufweist, wobei das Steuerungsmodul (12, 30, 54) eingerichtet ist, um über die Schnittstelle (10, 27, 50) eine Positionskoordinate von der Maschine (1, 16, 36) auszulesen und die ausgelesene Positionskoordinate mit einem vorgegebenen Koordinaten-Zielbereich abzugleichen und/oder
wobei das Steuerungsmodul (12, 30, 54) eingerichtet ist, eine Zeit des Zeitgebers (14, 32, 53) mit einem vorgegebenen Zeitpunkt abzugleichen und
wobei das Steuerungsmodul (12, 30, 54) eingerichtet ist, ein Triggersignal auszulösen, wenn das Steuerungsmodul (12, 30, 54) feststellt, dass die Positionskoordinate im Koordinaten-Zielbereich liegt und/oder wenn die Zeit des Zeitgebers (14, 32, 53) den vorgegebenen Zeitpunkt erreicht oder überschritten hat.

2. Messsystem (8, 23, 43) nach dem vorangegangenen Anspruch 1, **dadurch gekennzeichnet, dass** die Kontrolleinheit (11, 29, 52) das Triggersignal zusammen mit einem zum Zeitpunkt des Triggersignals erfassten ersten Messwert in der Speichereinheit (13, 31, 40) ablegt, wobei dem Messsystem (8, 23, 43) ein zeitlicher Bezug von Triggersignal und dem ersten Messwert bekannt ist.

3. Messsystem (8, 23, 43) nach einem der vorangegangenen Ansprüche, **dadurch gekennzeichnet, dass** das Messsystem (8, 23, 43), insbesondere die Kontrolleinheit (11, 29, 52) des Messsystems (8, 23, 43), dazu ausgebildet ist, das Triggersignal über die Schnittstelle (10, 27, 47, 50) an die Steuereinheit (5, 20, 40) der Maschine (1, 16, 36) zu übermitteln.

4. Messsystem (8, 23, 43) nach einem der vorangegangenen Ansprüche, **dadurch gekennzeichnet, dass** das Messsystem (8, 23, 43) dazu ausgebildet ist, eine zum Zeitpunkt des Triggersignals erfasste erste Positionskoordinate des an der Maschine (1, 16, 36) angeordneten Messinstruments (9, 24, 44) von der Maschine (1, 16, 36) auszulesen, wobei dem Messsystem (8, 23, 43) ein zeitlicher Bezug von Triggersignal und der ersten Positionskoordinate bekannt ist, wobei die Kontrolleinheit (11, 29, 52) des Messsystems (8, 23, 43) dazu ausgebildet ist, einen zeitlichen Bezug zwischen der ersten Positionskoordinate und dem ersten Messwerts herzustellen.

5. Messsystem (8, 23, 43) nach einem der vorangegangenen Ansprüche, **dadurch gekennzeichnet, dass** ausgehend von der Korrelation des ersten Messwerts mit der ersten Positionskoordinate, das Messsystem (8, 23, 43) dazu ausgebildet ist, weiteren vom Messinstrument (9, 24, 44) erfassten Messwerten Positionskoordinaten einzig dadurch zuzuweisen, dass eine Bewegungsgeschwindigkeit und eine Bewegungsrichtung des Messinstruments (9, 24, 44) während der Erfassung der Messwerte bekannt ist.

6. Messsystem (8, 23, 43) nach einem der vorangegangenen Ansprüche, **dadurch gekennzeichnet, dass** ausgehend von der Korrelation des ersten Messwerts mit der ersten Positionskoordinate, das Messsystem (8, 23, 43) dazu ausgebildet ist, weiteren vom Messinstrument (9, 24, 44) erfassten Messwerten weitere Positionskoordinaten dadurch zuzuweisen, dass dem Messsystem (8, 23, 43) ein räumlicher Bezug der erfassten Messwerte zueinander bekannt ist.

7. Messsystem (8, 23, 43) nach einem der vorangegangenen Ansprüche, **dadurch gekennzeichnet, dass** ausgehend von der Korrelation des ersten Messwerts mit der ersten Positionskoordinate, das Messsystem (8, 23, 43) dazu ausgebildet ist, weiteren vom Messinstrument (9, 24, 44) erfassten Messwerten weitere Positionskoordinaten dadurch zuzuweisen, dass dem Messsystem (8, 23, 43) ein zeitlicher Bezug der erfassten Messwerte zueinander bekannt ist.

8. Messsystem (8, 23, 43) nach einem der vorangegangenen Ansprüche, **dadurch gekennzeichnet, dass** das Messinstrument (9, 24, 44) als ein berührungslos arbeitendes Messinstrument (9, 24, 44) ausgebildet ist.

9. Messsystem (8, 23, 43) nach einem der vorangegangenen Ansprüche, **dadurch gekennzeichnet, dass** die Schnittstelle (10, 27, 50) als eine standardisierte Schnittstelle (10, 27, 50) ausgebildet ist.

10. Maschine (1, 16, 36), insbesondere Werkzeugmaschine und/oder Messmaschine, mit einem Messsystem (8, 23, 43) nach einem der vorangegangen genannten Ansprüchen 1 bis 9, **dadurch gekennzeichnet, dass** die Maschine (1, 16, 36) dazu ausgebildet ist, aufgrund des Triggersignals eine Achsbewegung zu stoppen.

11. Maschine (1, 16, 36), insbesondere Werkzeugmaschine und/oder Messmaschine, nach dem vorangegangenen Anspruch 10, **dadurch gekennzeichnet, dass** die Steuereinheit (5, 20, 40) der Maschine (1, 16, 36) eine Achsposition zum Zeitpunkt des Empfangs des Triggersignals in einem Speichermodul (6, 21, 41) der Maschine (1, 16, 36) auslesbar abspeichert.

## Claims

1. Measuring system (8, 23, 43) for acquiring measurement values by scanning, the measuring system (8, 23, 43) comprising an interface (10, 27, 50) for connecting the measuring system (8, 23, 43) to a control unit (5, 20, 40) of a machine (1, 16, 36), the machine (1, 16, 36) being in the form of a machine tool or a measuring machine, the measuring system (8, 23, 43) comprising a measuring instrument (9, 24, 44), the measuring system (8, 23, 43) being designed to be arrangeable at a movement bar (4, 19, 39) of the machine (1, 16, 36), a measurement object (7, 22, 42) being able to be measured using the measuring instrument (9, 24, 44), the measuring instrument (9, 24, 44) generating a measurement value when measuring the measurement object (7, 22, 42), the measuring system (8, 23, 43) comprising a controller unit (11, 29, 52), the controller unit (11, 29, 52) having a memory unit (13, 31, 40) for storing the measurement values acquired by the measuring system (8, 23, 43), the controller unit (11, 29, 52) being able to process and store the measurement value, the measuring system (8, 23, 43) comprising a time generator (14, 32, 53), **characterized in that** the measuring system (8, 23, 43) comprises a control module (12, 30, 54),
wherein the control module (12, 30, 54) is set up to read a position coordinate from the machine (1, 16, 36) via the interface (10, 27, 50) and to compare the read position coordinate with a specified coordinate target region
and/or
wherein the control module (12, 30, 54) is set up to compare a time of the time generator (14, 32, 53) with a specified time
and
wherein the control module (12, 30, 54) is set up to trigger a trigger signal should the control module (12, 30, 54) determine that the position coordinate is located within the coordinate target region and/or should the time of the time generator (14, 32, 53) have reached or passed the specified time.

2. Measuring system (8, 23, 43) according to preceding Claim 1, **characterized in that** the controller unit (11, 29, 52) stores the trigger signal in the memory unit (13, 31, 40) together with a first measurement value acquired at the time of the trigger signal, a temporal relationship between trigger signal and the first measurement value being known to the measuring system (8, 23, 43).

3. Measuring system (8, 23, 43) according to either of the preceding claims, **characterized in that** the measuring system (8, 23, 43), more particularly the controller unit (11, 29, 52) of the measuring system (8, 23, 43), is designed to transmit the trigger signal to the control unit (5, 20, 40) of the machine (1, 16, 36) via the interface (10, 27, 47, 50) .

4. Measuring system (8, 23, 43) according to any one of the preceding claims, **characterized in that** the measuring system (8, 23, 43) is designed to read a first position coordinate of the measuring instrument (9, 24, 44) arranged at the machine (1, 16, 36), acquired at the time of the trigger signal, from the machine (1, 16, 36), a temporal relationship between trigger signal and the first position coordinate being known to the measuring system (8, 23, 43), with the controller unit (11, 29, 52) of the measuring system (8, 23, 43) being designed to establish a temporal relationship between the first position coordinate and the first measurement value.

5. Measuring system (8, 23, 43) according to any one of the preceding claims, **characterized in that** proceeding from the correlation of the first measurement value with the first position coordinate, the measuring system (8, 23, 43) is designed to assign position coordinates to further measurement values acquired by the measuring instrument (9, 24, 44) purely by virtue of a movement speed and a movement direction of the measuring instrument (9, 24, 44) during the acquisition of the measurement values being known.

6. Measuring system (8, 23, 43) according to any one of the preceding claims, **characterized in that** proceeding from the correlation of the first measurement value with the first position coordinate, the measuring system (8, 23, 43) is designed to assign further position coordinates to further measurement values acquired by the measuring instrument (9, 24, 44) by virtue of a spatial relationship of the acquired measurement values to one another being known to the measuring system (8, 23, 43).

7. Measuring system (8, 23, 43) according to any one of the preceding claims, **characterized in that** proceeding from the correlation of the first measurement value with the first position coordinate, the measuring system (8, 23, 43) is designed to assign further position coordinates to further measurement values acquired by the measuring instrument (9, 24, 44) by virtue of a temporal relationship of the acquired measurement values to one another being known to the measuring system (8, 23, 43).

8. Measuring system (8, 23, 43) according to any one of the preceding claims, **characterized in that** the measuring instrument (9, 24, 44) is designed as a measuring instrument (9, 24, 44) that operates in contactless fashion.

9. Measuring system (8, 23, 43) according to any one of the preceding claims, **characterized in that** the interface (10, 27, 50) is in the form of a standardized interface (10, 27, 50).

10. Machine (1, 16, 36), more particularly machine tool and/or measuring machine, comprising a measuring system (8, 23, 43) according to any one of the preceding Claims 1 to 9, **characterized in that** the machine (1, 16, 36) is designed to stop a bar movement on the basis of the trigger signal.

11. Machine (1, 16, 36), more particularly machine tool and/or measuring machine, according to preceding Claim 10, **characterized in that** the control unit (5, 20, 40) of the machine (1, 16, 36) stores a bar position at the time of reception of the trigger signal in a memory module (6, 21, 41) of the machine (1, 16, 36) in readable fashion.

## Revendications

1. Système de mesure (8, 23, 43) pour acquérir des valeurs de mesure par balayage, dans lequel le système de mesure (8, 23, 43) présente une interface (10, 27, 50) pour relier le système de mesure (8, 23, 43) à une unité de commande (5, 20, 40) d'une machine (1, 16, 36), la machine (1, 16, 36) étant réalisée comme une machine-outil ou une machine de mesure, dans lequel le système de mesure (8, 23, 43) présente un instrument de mesure (9, 24, 44), le système de mesure (8, 23, 43) étant réalisé de manière à pouvoir être disposé sur un axe de déplacement (4, 19, 39) de la machine (1, 16, 36), dans lequel l'instrument de mesure (9, 24, 44) permet de mesurer un objet de mesure (7, 22, 42), l'instrument de mesure (9, 24, 44) produisant une valeur de mesure lors du mesurage de l'objet de mesure (7, 22, 42), dans lequel le système de mesure (8, 23, 43) présente une unité de contrôle (11, 29, 52), l'unité de contrôle (11, 29, 52) présentant une unité de mémoire (13, 31, 40) afin de stocker les valeurs de mesure acquises par le système de mesure (8, 23, 43), l'unité de contrôle (11, 29, 52) pouvant traiter et stocker la valeur de mesure, dans lequel le système de mesure (8, 23, 43) comprend un temporisateur (14, 32, 53),
**caractérisé en ce que**
- le système de mesure (8, 23, 43) présente un module de commande (12, 30, 54),
dans lequel le module de commande (12, 30, 54) est conçu pour lire une coordonnée de position de la machine (1, 16, 36) par l'intermédiaire de l'interface (10, 27, 50) et pour comparer la coordonnée de position lue avec une plage cible de coordonnées prédéfinie, et/ou
dans lequel le module de commande (12, 30, 54) est conçu pour comparer un temps du temporisateur (14, 32, 53) avec un temps prédéfini, et
dans lequel le module de commande (12, 30, 54) est conçu pour déclencher un signal de déclenchement lorsque le module commande (12, 30, 54) constate que la coordonnée de position se situe dans la plage cible de coordonnées, et/ou lorsque le temps du temporisateur (14, 32, 53) a atteint ou dépasse le temps prédéfini.

2. Système de mesure (8, 23, 43) selon la revendication précédente 1, **caractérisé en ce que** l'unité de contrôle (11, 29, 52) mémorise le signal de déclenchement avec une première valeur de mesure acquise au moment du signal de déclenchement dans l'unité de mémoire (13, 31, 40), dans lequel le système de mesure (8, 23, 43) connaît une relation temporelle entre le signal de déclenchement et la première valeur de mesure.

3. Système de mesure (8, 23, 43) selon l'une quelconque des revendications précédentes, **caractérisé en ce que** le système de mesure (8, 23, 43), en particulier l'unité de contrôle (11, 29, 52) du système de mesure (8, 23, 43), est réalisé pour transmettre le signal de déclenchement par l'intermédiaire de l'interface (10, 27, 47, 50) à l'unité de commande (5, 20, 40) de la machine (1, 16, 36).

4. Système de mesure (8, 23, 43) selon l'une quelconque des revendications précédentes, **caractérisé en ce que** le système de mesure (8, 23, 43) est réalisé pour lire dans la machine (1, 16, 36) une première coordonnée de position, acquise au moment du signal de déclenchement, de l'instrument de mesure (9, 24, 44) disposé sur la machine (1, 16, 36), dans lequel le système de mesure (8, 23, 43) connaît une relation temporelle entre le signal de déclenchement et la première coordonnée de position, dans lequel l'unité de contrôle (11, 29, 52) du système de mesure (8, 23, 43) est réalisée pour établir une relation temporelle entre la première coordonnée de position et la première valeur de mesure.

5. Système de mesure (8, 23, 43) selon l'une quelconque des revendications précédentes, **caractérisé en ce qu'**en partant de la corrélation de la première valeur de mesure avec la première coordonnée de position, le système de mesure (8, 23, 43) est réalisé pour attribuer à d'autres valeurs de mesure, acquises par l'instrument de mesure (9, 24, 44), des coordonnées de position uniquement par la connaissance d'une vitesse de déplacement et d'une direction de déplacement de l'instrument de mesure (9, 24, 44) pendant l'acquisition des valeurs de mesure.

6. Système de mesure (8, 23, 43) selon l'une quelconque des revendications précédentes, **caractérisé en ce qu'**en partant de la corrélation entre la première valeur de mesure et la première coordonnée de position, le système de mesure (8, 23, 43) est réalisé pour attribuer à d'autres valeurs de mesure, acquises par l'instrument de mesure (9, 24, 44), d'autres coordonnées de position **en ce que** le système de mesure (8, 23, 43) connaît une relation spatiale des valeurs de mesure acquises entre elles.

7. Système de mesure (8, 23, 43) selon l'une quelconque des revendications précédentes, **caractérisé en ce qu'**en partant de la corrélation entre la première valeur de mesure avec la première coordonnée de position, le système de mesure (8, 23, 43) est réalisé pour attribuer à d'autres valeurs de mesure, acquises par l'instrument de mesure (9, 24, 44), d'autres coordonnées de position **en ce que** le système de mesure (8, 23, 43) connaît une relation temporelle des valeurs de mesure acquises entre elles.

8. Système de mesure (8, 23, 43) selon l'une quelconque des revendications précédentes, **caractérisé en ce que** l'instrument de mesure (9, 24, 44) est réalisé comme un instrument de mesure (9, 24, 44) fonctionnant sans contact.

9. Système de mesure (8, 23, 43) selon l'une quelconque des revendications précédentes, **caractérisé en ce que** l'interface (10, 27, 50) est réalisée comme une interface standardisée (10, 27, 50).

10. Machine (1, 16, 36), en particulier machine-outil et/ou machine de mesure, comprenant un système de mesure (8, 23, 43) selon l'une quelconque des revendications précédentes 1 à 9, **caractérisée en ce que** la machine (1, 16, 36) est réalisée pour arrêter un mouvement axial en raison du signal de déclenchement.

11. Machine (1, 16, 36), en particulier machine-outil et/ou machine de mesure, selon la revendication précédente 10, **caractérisée en ce que** l'unité de commande (5, 20, 40) de la machine (1, 16, 36) stocke de manière lisible une position axiale dans un module de mémoire (6, 21, 41) de la machine (1, 16, 36) au moment de la réception du signal de déclenchement.
